# EUROPEAN PATENT SPECIFICATION

(11) **EP 3 467 020 B1**
(45) Date of publication and mention of the grant of the patent: **28.10.2020**
(21) Application number: 17806811.0
(22) Date of filing: 01.06.2017
(51) Int. Cl.: C08L 9/06, B60C 1/00, C08L 7/00, C08L 9/00, C08L 57/02, C08L 61/06, C08L 65/00

(54) **RUBBER COMPOSITION AND TIRE**
KAUTSCHUKZUSAMMENSETZUNG UND REIFEN
COMPOSITION DE CAOUTCHOUC, ET PNEUMATIQUE

(30) Priority: 01.06.2016 JP 2016110513
(43) Date of publication of application: 10.04.2019
(73) Proprietor: Bridgestone Corporation, Tokyo 104-8340 (JP)
(72) Inventor: YOSHIZAWA Kentaro, Tokyo 104-8340 (JP)
(74) Representative: Lang, Johannes
(86) International application number: PCT/JP2017/020516
(87) International publication number: WO 2017/209261

(56) References cited:
- EP-A1- 3 466 722
- WO-A1-2016/067581
- JP-A- 2011 094 012
- JP-A- 2013 227 375

## Description

### TECHNICAL FIELD

The present disclosure relates to a rubber composition and a tire.

### BACKGROUND

In relation to global carbon dioxide emission regulation, which is reflecting growing concern about environmental issues in recent years, there is an increasing demand for higher fuel efficiency in vehicles. In order to meet such demand, lower rolling resistance is required for tire performance. Here, in developing a tire tread rubber composition that contributes to tire rolling resistance, the loss tangent (tanδ) at around 60°C may generally be used effectively as an index, in consideration of the tire temperature which increases to around 60°C during normal driving; specifically, a rubber composition with low tanδ at around 60°C may be used as a tread rubber, to thereby suppress tire heat generation so as to reduce rolling resistance, which leads to improved tire fuel efficiency (PTL 1).

Further, in view of promoting vehicle driving safety, importance is placed on ensuring braking performance on a wet road surface (hereinafter, simply referred as "wet performance"), which requires not only to improve tire fuel efficiency but also to improve wet performance. In this regard, PTL 2 discloses a rubber composition for a tread of a tire, in which tanδ at 0°C is set to 0.95 or higher, so as to improve wet performance.

### CITATION LIST

### Patent Literature

PTL 1: JP 2012-92179 A
PTL 2: JP 2014-9324 A

### SUMMARY

### (Technical Problem)

However, when a rubber composition that is high in tanδ at 0°C is simply used in a tread rubber in order to improve tire wet performance, tanδ at 60°C, which relates to tire fuel efficiency, also becomes higher, which thus leads to a problem of deterioration in tire fuel efficiency.

It could therefore be helpful to provide a rubber composition capable of solving the aforementioned conventional problems in the art, to thereby improve wet performance without deteriorating tire fuel efficiency.

It could also be helpful to provide a tire improved in wet performance without deteriorating fuel performance.

### (Solution to Problem)

Thus, configurations disclosed herein are as follows:

The disclosed rubber composition includes: a rubber component (A) containing a styrene-butadiene copolymer rubber (A1) having a glass transition temperature (Tg) of -30°C or less, a rubber (A2) other than the styrene-butadiene copolymer rubber (A1), the rubber (A2) being different in SP value by 0.35 (cal/cm³)^{1/2} or less from the styrene-butadiene copolymer rubber (A1); a thermoplastic resin (B); and a filler (C),
the rubber component (A) containing 50 to 90 mass% of the styrene-butadiene copolymer rubber (A1), containing 10 to 50 mass% of the rubber (A2) different in SP value from the styrene-butadiene copolymer rubber (A1) by 0.35 (cal/cm³)^{1/2} or less, and containing 0 to 10 mass% of a rubber (A3) being different in SP value from the styrene-butadiene copolymer rubber (A1) by more than 0.35 (cal/cm³)^{1/2},
in which the thermoplastic resin (B) is compounded by 5 to 40 parts by mass with respect to 100 parts by mass of the rubber component (A).

The disclosed rubber composition may be applied to a tire tread rubber, to thereby improve tire wet performance without deteriorating fuel efficiency.

Here in this disclosure, the glass transition temperature (Tg) of the styrene-butadiene copolymer rubber is an extrapolated onset temperature: Tf measured according to ASTM D3418-82, using a differential scanning calorimeter (DSC).

In the disclosure, the SP value (solubility parameter) is calculated according to Fedors method.

In the disclosed rubber composition, tanδ at 0°C is preferably 0.5 or less, and the difference between tanδ at 30°C and tanδ at 60°C is preferably 0.07 or less. Further, the disclosed rubber composition preferably has a storage modulus of 20 MPa or less on dynamic strain of 1% at 0°C. In this case, the rubber composition may be applied to a tread rubber of a tire, which allows for further improving wet performance of the tire and also improving fuel efficiency of the tire at low temperatures, and even improving fuel efficiency of the tire across a wide temperature region.

The disclosed rubber composition contains silica as the filler (C), and the filler (C) is compounded by 60 parts by mass or more with respect to 100 parts by mass of the rubber component (A). In this case, the rubber composition may be applied to a tread rubber of a tire, which allows for further improving wet performance of the tire and also improving fuel efficiency of the tire.

The silica is compounded by 40 to 70 parts by mass with respect to 100 parts by mass of the rubber component (A). In this case, the rubber composition may be applied to a tread rubber of a tire, which allows for further improving fuel efficiency of the tire and also improving wet performance of the tire.

In the disclosed rubber composition, the difference between tanδ at 0°C and tanδ at 30°C is preferably 0.30 or less. In this case, the rubber composition may be applied to a tire tread rubber, which allows for suppressing temperature dependence of the fuel efficiency while further improving the tire wet performance.

In the disclosed rubber composition, the difference between tanδ at 0° and tanδ at 60°C is 0.35 or less. In this case, the rubber composition may be applied to a tread rubber of a tire, which allows for suppressing temperature dependence of the fuel efficiency of the tire.

The disclosed rubber composition contains carbon black as the filler (C), the carbon black being preferably be compounded by 1 to 10 parts by mass with respect to 100 parts by mass of the rubber component (A). In this case, the rubber composition may be applied to a tread rubber of a tire, which allows for attaining at high levels both fuel efficiency and wet performance of the tire.

In the disclosed rubber composition, the thermoplastic resin (B) may preferably be one more resins selected from the group consisting of: C₅ resins; C₉ resins, C₅-C₉ resins, dicyclopentadiene resins, rosin resins, alkyl phenol resins, and terpene phenol resins. In this case, the rubber composition may be applied to a tire tread rubber, to thereby further improve tire wet performance.

Further, the disclosed tire is characterized in that the aforementioned rubber composition is used as a tread rubber. The disclosed tire uses the aforementioned rubber composition in a tread rubber and thus is improved wet performance without deteriorating fuel efficiency.

### (Advantageous Effect)

The rubber composition disclosed herein is capable of improving wet performance without deteriorating tire fuel efficiency. Further, the tire disclosed herein is improved in wet performance without deteriorating fuel efficiency.

### DETAILED DESCRIPTION

The disclosed rubber composition and tire are illustrated in detail by way of example, based on an embodiment thereof.

### <Rubber Composition>

The disclosed rubber composition contains: a styrene-butadiene copolymer rubber (A1) having a glass transition temperature (Tg) of -30°C or less, a rubber (A2) other than the styrene-butadiene copolymer rubber (A1), the rubber (A2) being different in SP value by 0.35 (cal/cm³)^{1/2} or less from the styrene-butadiene copolymer rubber (A1); a thermoplastic resin (B); and a filler (C),
the rubber component (A) containing 50 to 90 mass% of the styrene-butadiene copolymer rubber (A1), containing 10 to 50 mass% of the rubber (A2) different in SP value from the styrene-butadiene copolymer rubber (A1) by 0.35 (cal/cm³)^{1/2} or less, and containing 0 to 10 mass% of a rubber (A3) being different in SP value from the styrene-butadiene copolymer rubber (A1) by more than 0.35 (cal/cm³)^{1/2},
in which the thermoplastic resin (B) is compounded by 5 to 40 parts by mass with respect to 100 parts by mass of the rubber component (A).

In the disclosed rubber composition, the rubber component (A) contains 50 mass% or more of the styrene-butadiene copolymer rubber (A1) having a glass transition temperature (Tg) of -30°C or less, to thereby improve rigidity of the rubber composition. Here, when the styrene-butadiene copolymer rubber to be compounded has a glass transition temperature (Tg) that is higher than -30°C, tanδ at 60°C of the rubber composition increases, which may deteriorates fuel efficiency of a tire applied with the rubber composition.

In the disclosed rubber composition, the thermoplastic resin (B) is compounded by a specified amount, so as to be capable of suppressing reduction of the elastic modulus in a low distortion region while reducing the elastic modulus in a high distortion region. Thus, the disclosed rubber composition may be applied to a tire tread rubber, so as to ensure rigidity of the tread rubber in a portion that suffers minor distortion during running as being distant from the contact patch with a road surface, while increasing the deformed volume of the tread rubber that suffers significant distortion during running as being in the vicinity of the contact patch with a road surface.

Then, the friction coefficient (µ) on a wet road surface is proportional to the product of the rigidity of the tread rubber as a whole, the deformation volume of the tread rubber, and tanδ (loss tangent); however, a tire having the disclosed rubber composition applied to the tread rubber thereof is capable of increasing the deformation volume of the tread rubber while ensuring the rigidity of the tread rubber as a whole even without increasing tanδ. Accordingly, the tire is capable of sufficiently increasing the friction coefficient (µ) on a wet road surface, and such large friction coefficient (µ) on a wet road surface can improve wet performance. Further, a tire applied with the disclosed rubber composition does not increase tanδ so as to be capable of maintaining fuel efficiency. Therefore, the tire having the disclosed rubber composition applied to the tread rubber thereof maintains tanδ, so as to maintain fuel efficiency, and is also capable of improving wet performance due to the friction coefficient (µ) being high on a wet road surface.

Further, in the disclosed rubber composition, the rubber component (A) contains 10 mass% or less of the rubber (A3) that is different in SP value from the styrene-butadiene copolymer rubber (A1) by more than 0.35 (cal/cm³)^{1/2} and contains 10 to 50 mass% of the rubber (A2) that is different in SP value from the styrene-butadiene copolymer rubber (A1) by 0.35 (cal/cm³)^{1/2} or less, so as to sufficiently ensure the uniformity of the rubber component (A) as a whole, to thereby improve abrasion resistance performance of the rubber composition.

In the disclosed rubber composition, the rubber component (A) contains 50 mass% or more, and preferably 60 mass% or more of the styrene-butadiene copolymer rubber (A1) having a glass transition temperature (Tg) of -30°C or lower. Further, the rubber component (A) contains 90 mass% or less, preferably 80 mass% or less, and more preferably 70 mass% or less of the styrene-butadiene copolymer rubber (A1) having a glass transition temperature (Tg) of -30°C or lower. The rubber component (A) containing 50 mass% or more of the styrene-butadiene copolymer rubber (A1) having a glass transition temperature (Tg) of -30°C or lower increases rigidity of the rubber composition, and the rubber composition may be applied to a tread rubber of a tire, which allows for improving wet performance of the tire. Meanwhile, the rubber component (A) containing 90 mass% or less of the styrene-butadiene copolymer rubber (A1) having a glass transition temperature (Tg) of -30°C or lower allows for compounding 10 mass% or more of the rubber (A2) that is different in SP value by 0.35 (cal/cm³)^{1/2} or less from styrene-butadiene copolymer rubber (A1) to be described later, which produces an effect resulting from the blending of the rubber (A2).

On the other hand, the rubber (A2) other than the styrene-butadiene copolymer rubber (A1) having a glass transition temperature (Tg) of -30°C or lower, the rubber (A2) being different in SP value by 0.35 (cal/cm³)^{1/2} or less from the styrene-butadiene copolymer rubber is highly compatible with the styrene-butadiene copolymer rubber (A1) having a glass transition temperature (Tg) of -30°C or lower. Examples of the rubber (A2) may include, in addition to natural rubber (NR), synthetic diene-based rubber such as synthetic isoprene rubber (IR), polybutadiene rubber (BR), styrene-butadiene copolymer rubber (SIR) having a glass transition temperature exceeding -30°C, and styrene-isoprene copolymer rubber (SIR). The rubber component (A) contains 10 to 50 mass%, preferably 20 to 40 mass%, of the rubber (A2) that is different in SP value by 0.35 (cal/cm³)^{1/2} or less from the styrene-butadiene copolymer rubber (A1).

In the disclosed rubber composition, the rubber (A3) different in SP value by more than 0.35 (cal/cm³)^{1/2} from the styrene-butadiene copolymer rubber (A1) is not an essential component; the rubber component (A) contains 0 to 10 mass%, preferably 0 to 5 mass% of the rubber (A3). The rubber (A3), which is less compatible with the styrene-butadiene copolymer rubber (A1), will have a sufficiently small effect on the uniformity of the rubber component (A) as a whole when contained by 10 mass% or less in the rubber component (A).

An example of the rubber (A3) may include, for example, an emulsion-polymerized styrene-butadiene rubber "JSR 0202" manufactured by JSR Corporation.

In the disclosed rubber composition, tanδ at 0°C is preferably 0.5 or less, and a difference between tanδ at 30°C and tanδ at 60°C is preferably 0.07 or less, and a storage modulus on dynamic strain 1% at 0°C is preferably 20 MPa or less.

The rubber composition having tanδ of 0.5 or less at 0°C is capable of improving fuel efficiency at low temperatures of the tire applied with the rubber composition. Here, tanδ at 0°C is more preferably 0.45 or less, and further preferably 0.41 or less, in view of tire fuel efficiency at low temperatures. The lower limit of tanδ at 0°C is not particularly limited; however, tanδ at 0°C is generally 0.15 or more.

Further, when the difference between tanδ at 30°C and tanδ at 60°C is 0.07 or less, the temperature dependence of tanδ will be reduced to small, which allows for improving fuel efficiency of the tire applied with the rubber composition across a wide temperature region. Here, the difference between tanδ at 30°C and tanδ at 60°C is more preferably 0.06 or less, further preferably 0.055 or less, and particularly preferably 0.05 or less, in view of suppressing temperature dependence of the fuel efficiency of the tire. Further, the lower limit of the difference between tanδ at 30°C and tanδ at 60°C is not particularly limited, and the difference may be 0. Further, either tanδ at 30°C or tanδ at 60°C may be larger; in general, tanδ at 30°C is larger than tanδ at 60°C.

The rubber composition having a storage modulus (E') of 20 MPa or less on dynamic strain of 1% at 0°C is high in flexibility of the rubber composition at low temperatures; the rubber composition may be applied to a tread rubber of a tire to obtain excellent ground-contact performance, which can further improve wet performance of the tire. The storage modulus (E') on dynamic strain of 1% at 0°C is more preferably 18 MPa or less, further preferably 16 MPa or less, and preferably 3 MPa or more, and more preferably 5 MPa or more, in view of wet performance.

Further, the disclosed rubber composition has tanδ at 30°C, which is preferably 0.4 or less, more preferably 0.35 or less, and generally 0.1 or more. Further, the disclosed rubber composition has tanδ at 60°C, which is preferably 0.35 or less, more preferably 0.3 or less, and generally 0.05 or more. This case allows for improving fuel efficiency across a wide temperature range.

In the disclosed rubber composition, the difference between tanδ at 0°C and tanδ at 30°C is preferably 0.30 or less, more preferably 0.05 to 0.20, and further preferably 0.08 to 0.15, and particularly preferably 0.10 to 0.14, in view of improving wet performance and reducing temperature dependence of fuel efficiency.

In the disclosed rubber composition, the difference between tanδ at 0°C and tanδ at 60°C is preferably 0.35 or less, more preferably 0.24 or less, and further preferably 0.23 or less, or may even be 0, in view of reducing temperature dependence of fuel efficiency.

The disclosed rubber composition has a tensile strength (Tb) which is preferably 20 MPa or more, and more preferably 23 MPa or more, in view of improving wet performance. The rubber composition with a tensile strength of 20 MPa or more may be applied to a tread rubber, so as to improve rigidity of the tread rubber as a whole, which allows for further improving wet performance.

The disclosed rubber composition contains a thermoplastic resin (B). The thermoplastic resin (B) may be compounded, so as to reduce the elastic modulus in a high distortion region while suppressing reduction in the elastic modulus in a low distortion region. Accordingly, a rubber composition compounded with the thermoplastic resin (B) may be applied to a tread of a tire, so as to ensure rigidity of the tread rubber in a portion that suffers minor distortion during running as being distant from the contact patch with a road surface, while increasing the deformed volume of the tread rubber that suffers significant distortion during running as being in the vicinity of the contact patch with a road surface, with the result that the friction coefficient (µ) on a wet road surface is increased, to thereby improve the wet performance of the tire.

The compounding amount of the thermoplastic resin (B) is 5 to 40 parts by mass, preferably 8 to 30 parts by mass, and more preferably 10 to 20 parts by mass, with respect to 100 parts by mass of the rubber component (A). The compounding amount of the thermoplastic resin (B) falling below 5 parts by mass, with respect to 100 parts by mass of the rubber component (A), cannot sufficiently reduce the elastic modulus in a high distortion region of the rubber composition, while the compounding amount exceeding 40 parts by mass cannot sufficiently suppress reduction in elastic modulus of the rubber composition in a low distortion region.

Examples preferred as the thermoplastic resin (B) in terms of wet performance may include: a C₅ resin; a C₉ resin; a C₅-C₉ resin; a dicyclopentadiene resin; a rosin resin, an alkyl phenol resin; and a terpene phenol resin, and these examples of the thermoplastic resin (B) may be used alone or in combination of two or more.

The C₅ resin refers to a C₅ synthetic petroleum resin. Examples of such C₅ resin may include, for example, an aliphatic resin obtained by polymerizing, using a Friedel-Crafts type catalyst such as AlCl₃, BF₃, a C₅ fraction resulting from thermal cracking of naphtha in petrochemical industry. The C₅ fraction generally includes: an olefin-based hydrocarbon such as 1-pentene, 2-pentene, 2-methyl-1-butene, 2-methyl-2-butene, 3-methyl-1-butene; and a diolefin-based hydrocarbon such as 2-methyl-1,3-butadiene, 1,2-pentadiene, 1,3-pentadiene, 3-methyl-1,2-butadiene. The C₅ resin is commercially available, and examples thereof include, for example, "ESCOREZ (registered trademark) 1000 series" as an aliphatic petroleum resin manufactured by ExxonMobil Chemical Company, and "A100, B170, M100, R100" etc. from among "Quintone (registered trademark) 100 Series" as an aliphatic petroleum resin manufactured by Zeon Corporation.

The C₉ resin is a resin obtained by polymerizing an aromatic compound with 9 carbon atoms containing, as principal monomers, vinyl toluene, alkyl styrene, indene, which are C₉ fractions by-produced together with petrochemical fundamental raw materials such as ethylene and propylene, through, for example, thermal cracking of naphtha in petrochemical industries. Here, specific examples of C₉ fractions obtained through thermal cracking of naphtha may include: vinyl toluene; α-methylstyrene; β-methylstyrene; γ-methylstyrene; o-methylstyrene; p-methylstyrene; and indene. The C₉ resin may be obtained by using, along with C₉ fractions, styrene or the like as a C₈ fraction, methylindene, 1,3-dimethylstyrene as C₁₀ fractions, and even naphthalene, vinylnaphthalene, vinylanthracene, p-tert-butylstyrene as raw materials, and by copolymerizing these C₈ to C₁₀ fractions as mixtures, through, for example, a Friedel-Crafts type catalyst. The C₉ resin may be a modified petroleum resin modified by a compound having a hydroxyl group or an unsaturated carboxylic compound. The C₉ resin is commercially available, and examples of an unmodified C₉ petroleum resin may be available under the trade names such as "Nisseki Neopolymer (registered trademark) L-90", "Nisseki Neopolymer (registered trademark) 120", "Nisseki Neopolymer (registered trademark) 130", "Nisseki Neopolymer (registered trademark) 140" (manufactured by JX Nippon Oil & Energy Corporation).

The C₅-C₉ resins refer to a C₅-C₉ synthetic petroleum resins. An example of such C₅-C₉ resins may include a solid polymer obtained by, for example, polymerizing petroleum-derived C₅ fraction and C₉ fraction, using a Friedel-Crafts type catalyst such as AlCl₃, BF₃, and more specific examples thereof may include a copolymer or the like containing styrene, vinyltoluene, α-methylstyrene, and indene as principal components. Preferred as the C₅-C₉ resins is a resin containing less components of C₉ or more, in view of the compatibility with the rubber component (A). Here, a resin containing "fewer components of C₉ or more" refers to a resin containing less than 50 mass%, and preferably 40 mass% or less of components of C₉ or more, with respect to the total amount of the resin. The C₅-C₉ resins are commercially available under the trade names such as "Quintone (registered trademark) G100B" (manufactured by Zeon Corporation), and of "ECR213" (manufactured by ExxonMobil Chemical Company).

The dicyclopentadiene resin is a petroleum resin manufactured using, as a main material, dicyclopentadiene obtained through dimerization of cyclopentadiene. The cyclopentadiene resin is commercially available under the trade names such as "Quintone (registered trademark) 1000 Series", among which "1105, 1325, 1340", as an alicyclic petroleum resin manufactured by Zeon Corporation.

The rosin resin is an residue left after distillation of turpentine oil from balsams such as pine resin collected as tree sap from plants of the pine family, and examples thereof include: a natural resin including rhodinic acid (such as abietic acid, palustric acid, isopimaric acid); and a modified resin or hydrogenated resin obtained by modifying and processing the natural resin through hydroganation. Examples thereof may include, for example: a natural resin rosin, and a polymerized rosin or partially hydrogenated rosin thereof; a glycerin ester rosin, and a partially hydrogenated rosin, fully hydrogenated rosin, or polymerized rosin thereof; a pentaerythritol ester rosin, and a partially hydrogenated rosin or polymerized rosin thereof. Examples of the natural resin rosin include: gum rosin, tall oil rosin, and wood rosin, which are contained in a crude pine resin or tall oil. The rosin resin is commercially available under the trade names such as "NEOTALL 105" (manufactured by Harima Chemicals Group, Inc.), "SN Tack 754" (manufactured by San Nopco Ltd.), "Lime Resin No. 1", "Pensel A", and "Pensel AD" (manufactured by Arakawa Chemical Co., Ltd.), and "Poly-Pale" and "Pentalyn C" (manufactured by Eastman Chemical Co., Ltd.), and "High Rosin S" (manufactured by Taishamatsu Essential Oil Co., Ltd.).

The alkyl phenol resin may be obtained through, for example, a condensation reaction in the presence of a catalyst of alkylphenol and formaldehyde. The alkyl phenol resin is commercially available under the trade names of, for example, "Hitanol 1502P" (manufactured by Hitachi Chemical Industry Co., Ltd.), "TACKIROL 201" (manufactured by Taoka Chemical Company, Limited), "TACKIROL 250-1" (brominated alkylphenol formaldehyde resin, manufactured by Taoka Chemical Company, Limited), "TACKIROL 250-III" (brominated alkylphenol formaldehyde resin, manufactured by Taoka Chemical Company, Limited), and "R7521P", "SP1068", "R7510PJ", "R7572P", and "R7578P" (manufactured by SI GROUP INC.).

The terpene phenol resin may be obtained by, for example, subjecting terpenes and various phenols to reaction using a Friedel-Crafts type catalyst, or further to condensation with formaline. Terpenes to be used as the raw material are not particularly limited, and may preferably be monoterpene hydrocarbons such as α-pinene and limonene, and more preferably terpenes containing α-pinene, with α-pinene being particularly preferred. The terpene phenol resin is commercially available under the trade names of, for example, "TAMANOL 803L", "TAMANOL 901" (manufactured by Arakawa Chemical Industries, Ltd.), "YS Polyster (registered trademark) U" series, "YS Polyster (registered trademark) T" series, "YS Polyster (registered trademark) S" series, "YS Polyster (registered trademark) G" series, "YS Polyster (registered trademark) N" series, "YS Polyster (registered trademark) K" series, "YS Polyster (registered trademark) TH" series (manufactured by YASUHARA CHEMICAL CO., LTD.).

The disclosed rubber composition includes the filler (C). The filler (C) is compounded by 60 parts by mass or more with respect to 100 parts by mass of the rubber component (A). Further, the filler (C) may preferably be compounded by 100 parts by mass or less, and more preferably 80 parts by mass or less, with respect to 100 parts by mass of the rubber component (A). The filler (C) is compounded by 60 parts by mass or more with respect to 100 parts by mass of the rubber component (A) in the rubber composition, so as to improve reinforcibility and rigidity of the rubber composition, and the rubber composition may be applied to a tread rubber of a tire, to thereby further improve wet performance.

Further, the disclosed rubber composition includes silica as the filler (C), and the content of silica in the filler (C) may preferably 70 mass% or more, and more preferably 80 mass% or more, and further preferably 90 mass% or more, and the total content of the filler (C) may be silica. Silica contained as the filler (C) can reduce tanδ at 60°C of the rubber composition, which further improves fuel efficiency of a tire applied with the rubber composition. Further, the content of silica in the filler being 70 mass% or more allows for further reducing tanδ at 60°C of the rubber composition, which still further improves fuel efficiency of a tire applied with the rubber composition.

The silica is not particularly limited, and examples thereof may include, for example, wet silica (hydrated silicic acid), dry silica (silicic anhydride), calcium silicate, and aluminum silicate, with wet silica being preferred. These silica may be use alone or in combination of two or more.

In the disclosed rubber composition, the nitrogen adsorption specific surface area of silica in the filler (C) is not particularly limited, and general silica with a nitrogen adsorption specific surface area exceeding 150 m²/g may be used. Alternatively, silica with a relatively large particle size may also be used in which the average primary particle size of the silica is 21 nm or more and the nitrogen adsorption specific surface area is 150 m²/g or less (hereinafter, also referred to as "large particle silica").

In the disclosed rubber composition, silica is compounded in a range of 40 to 70 parts by mass and preferably in a range of 45 to 60 parts by mass, with respect to 100 parts by mass of the rubber component (A). Silica compounded by 40 parts by mass or more with respect to 100 parts by mass of the rubber component (A) is capable of further reducing tanδ at 60°C of the rubber composition, so as to further improve fuel efficiency of a tire applied with the rubber composition. Meanwhile, silica compounded by 70 parts by mass or less is capable of providing high flexibility to the rubber composition; such rubber composition may be applied to a tread rubber of a tire, which increases the deformation volume of the tread rubber, to thereby further improve wet performance of the tire.

The disclosed rubber composition may preferably further contain carbon black as the filler (C), where the carbon black may be compounded preferably in a range of 1 to 10 parts by mass and more preferably in a range of 3 to 8 parts by mass, with respect to 100 parts by mass of the rubber component (A). The rubber composition compounded with carbon black by 1 part by mass or more can be increased in rigidity. Alternatively, the rubber composition compounded with carbon black by 10 parts by mass or less is capable of suppressing increase of tanδ, which allows for achieving both tire fuel efficiency and wet performance of a tire at higher levels when the rubber composition is applied to a tread rubber of the tire.

The carbon black is not particularly limited, and examples thereof may include carbon blacks of such grades as, for example, GPF, FEF, HAF, ISAF, SAF, with ISAF, SAF being preferred in view of improving tire wet performance. These carbon blacks may be used alone or in combination or two or more.

The filler (C) may also include, in addition to the aforementioned silica and carbon black: aluminum hydroxide; alumina; clay; calcium carbonate; and the like.

The disclosed rubber composition may preferably further contain a silane coupling agent in order to improve the compounding effect of the silica. The silane coupling agent is not particularly limited, and examples thereof may include, for example, bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 3-trimethoxysilylpropylbenzothiazolyltetrasulfide, 3-triethoxysilylpropylbenzothiazolyltetrasulfide, 3-triethoxysilylpropyl methacrylate monosulfide, 3-trimethoxysilylpropyl methacrylate monosulfide, bis(3-diethoxymethylsilylpropyl)tetrasulfide, 3-mercaptopropyldimethoxymethylsilane, dimethoxymethylsilylpropyl-N,N-dimethylthiocarbamoyltetrasulfide, dimethoxymethylsilylpropylbenzothiazolyltetrasulfide. These silane coupling agents may be used alone or in combination of two or more.

Further, the silane coupling agent may preferably be compounded in a range of 2 to 20 parts by mass and more preferably in a range of 5 to 15 parts by mass, with respect to 100 parts by mass of the silica. The silane coupling agent compounded by 2 parts by mass or more, with respect to 100 parts by mass of silica, is capable of sufficiently improving the compounding effect of the silica, while the silane coupling agent compounded by 20 parts by mass or less is less likely to result in gelation of the rubber component (A).

The disclosed rubber composition may further include a softener in view of processability and operability. The softener may preferably be compounded in a range of 1 to 5 parts by mass and more preferably in a range of 1.5 to 3 parts by mass, with respect to 100 parts by mass of the rubber component (A). The softener compounded by 1 part by mass or more can facilitate kneading of the rubber composition, while the softener compounded by 5 parts by mass or less can suppress reduction in rigidity of the rubber composition.

Here, examples of the softener may include mineral-derived mineral oil, petroleum-derived aromatic oil, paraffin oil, naphthene oil, and naturally-derived palm oil, with mineral-derived softener and petroleum-derived softener being preferred in view of tire wet performance.

The disclosed rubber composition may further include a fatty acid metal salt. Examples of metals for use in the fatty acid metal salt may include Zn, K, Ca, Na, Mg, Co, Ni, Ba, Fe, Al, Cu, Mn, with Zn being preferred. Meanwhile, examples of fatty acid for use in the fatty acid metal salt may include a fatty acid having a saturated or unsaturated straight chain, branched chain, or cyclic structure with 4 to 30 carbon atoms, with a saturated or unsaturated straight chain fatty acid with 10 to 22 carbon atoms being preferred. Examples of the saturated straight chain fatty acid with 10 to 22 carbon atoms may include: lauric acid; myristic acid; palmitic acid; stearic acid; and the like, and examples of the unsaturated straight chain fatty acid with 10 to 22 carbon atoms may include: oleic acid; linoleic acid; linolenic acid; arachidonic acid; and the like. The fatty acid metal salts may be used alone or in combination of two or more.

The fatty acid metal salt may preferably be compounded in a range of 0.1 to 10 parts by mass and more preferably in a range of 0.5 to 5 parts by mass, with respect to 100 parts by mass of the rubber component (A).

The disclosed rubber composition may also include, for example, compounding agents generally used in the rubber industry, such as stearic acid, an age resistor, zinc oxide (zinc white), a vulcanization accelerator, and a vulcanizing agent which may be selected as appropriate without affecting the object of the present disclosure, in addition to the rubber component (A), the thermoplastic resin (B), the filler (C), the silane coupling agent, the softener, and the fatty acid metal salt. These compounding agents may suitably use those commercially available. However, in view of reducing storage modulus of the disclosed rubber composition on dynamic strain of 1% at 0°C, it is preferred not to compound thermosetting resins such as novolak-type and resol-type phenol resin, and resorcinol resin.

The disclosed rubber composition may be used for various rubber products including tires. In particular, the disclosed rubber composition is suited for a tread rubber of a tire.

The disclosed rubber composition suitably configured as described above, in which tanδ at 0°C is 0.5 or less and the difference between tanδ at 30°C and tanδ at 60°C is 0.070 or less, is preferably produced through the step of kneading the rubber component (A), the thermoplastic resin (B), and the filler (C) at 150 to 165°C, excluding the vulcanization compounding agents including the vulcanizing agent and the vulcanization accelerator.

The kneading of the aforementioned components at 150 to 165°C, excluding the vulcanization compounding agent, can have the compounding agents, other than the vulcanization compounding agents, uniformly dispersed into the rubber component (A) while avoiding premature vulcanization (scorch), so that the compounding effect of the compounding agents can be full exerted, which makes small the difference between tanδ at 30°C and tanδ at 60°C while reducing tanδ of the rubber composition at 0°C.

Here, the rubber composition may be varied in tanδ, the difference between tanδ at respective temperatures, the storage modulus (E'), and the tensile strength (Tb) by adjusting, not only the aforementioned kneading temperature, but also the types and the compounding ratio of the rubber component (A), the types and the compounding amount of the thermoplastic resin (B), the ratio of silica in the filler (C) and the types of silica, and further the types and amounts of other compounding agents.

Further, the rubber composition, which has been kneaded at 150 to 165°C, may preferably be further kneaded at another temperature of less than 150°C with the addition of vulcanization compounding agents. Here, the rubber composition, in which the compounding agents other than the vulcanization compounding agent have been uniformly dispersed in the rubber component (A) and thereafter compounded with vulcanization compounding agents including a vulcanizing agent and a vulcanization accelerator, may preferably be kneaded at a temperature capable of preventing premature vulcanization (scorch), for example, at 90°C to 120°C.

In the manufacture of the rubber composition, the kneading time for the kneading at each temperature is not particularly limited, and may be set as appropriate in consideration of the size of the kneader, the volume of the raw material, and the types and condition of the raw material.

Examples of the vulcanizing agent may include sulfur and the like. The vulcanizing agent may be compounded, in terms of sulfur content, in a range of 0.1 to 10 parts by mass and more preferably in a range of 1 to 4 parts by mass, with respect to 100 parts by mass of the rubber component (A). The compounding amount of the vulcanizing agent, which is 0.1 parts by mass or more in terms of sulfur content, is capable of ensuring the rupture strength and abrasion resistance of the vulcanized rubber, while the compounding amount of 10 parts by mass or less is capable of sufficiently ensuring rubber elasticity. In particular, the compounding amount of the vulcanizing agent, which is 4 parts by mass or less in terms of sulfur, is capable of further improving wet performance of the tire.

The vulcanization accelerator is not particularly limited, and examples thereof may include, for example, a thiazole-based vulcanization accelerator such as 2-mercaptobenzothiazole (M), dibenzothiazyl disulfide (DM), N-cyclohexyl-2-benzothiazylsulfenamide (CZ), N-tert-butyl-2-benzothiazolylsulfenamide (NS), and a guanidine-based vulcanization accelerator such as 1,3-diphenylguanidine (DPG). Here, the disclosed rubber composition may preferably include three different vulcanization accelerators. The vulcanization accelerator may preferably be compounded in a range of 0.1 to 5 parts by mass and more preferably in a range of 0.2 to 3 parts by mass, with respect to 100 parts by mass of the rubber component (A).

The disclosed rubber composition is obtained by compounding, into the rubber component (A), the thermoplastic resin (B) and the filler (C) and various compounding agents selected as needed, and by kneading the same as described above by using, for example, a Banbury mixer or a roll, and thereafter by subjecting the resultant product to warming, extrusion or the like.

### <Tire>

The disclosed tire has a feature of using the aforementioned rubber composition as a tread rubber. The disclosed tire uses the aforementioned rubber composition in a tread rubber, and thus, is improved in wet performance without deteriorating fuel efficiency. The disclosed tire can be used as a tire for various vehicles, but is preferred as a tire for passenger vehicles.

The disclosed tire may be obtained using, depending on the types of the tire to be applied, an unvulcanized rubber composition, and may be vulcanized after being formed. Alternatively, the disclosed tire may be obtained using a semi-vulcanized rubber through such process as pre-vulcanization process which is shaped and further vulcanized. The disclosed tire is preferably a pneumatic tire, and a gas to be filled into the pneumatic tire may use an inert gas such as nitrogen, argon, and helium, in addition to general air or air adjusted in terms of oxygen partial pressure.

### EXAMPLES

In below, the present disclosure is described in detail with reference to Examples; however, the present disclosure is not limited at all to the following Examples.

### <Preparation and Evaluation of Rubber Composition>

Rubber compositions were manufactured according to the formulations of Tables 1 to 2, using a general Banbury mixer to knead components other than vulcanization compounding agents including sulfur, a vulcanization accelerator, and zinc oxide at a maximum temperature of 160°C, add the vulcanization compounding agents to the resultant kneaded product and further knead them at a maximum temperature of 110°C. The rubber compositions thus obtained were measured by the following methods for the loss tangent (tanδ), the storage modulus (E'), and the tensile strength (Tb), and further, evaluated for wet performance, fuel efficiency, and abrasion resistance. The results are provided in Tables 1 to 2.

### (1) Loss Tangent (tanδ) and Storage Modulus (E')

The rubber composition was vulcanized for 33 minutes at 145°C to be obtained as a vulcanized rubber, which was measured for tanδ (loss tangent) at 0°C, 30°C, 60°C, and the storage modulus (E') at 0°C, using a spectrometer manufactured by Ueshima Seisakusho Co., Ltd, under the condition of the initial load: 160 mg, the dynamic strain: 1%, and the frequency: 52 Hz.

### (2) Tensile Strength (Tb)

The rubber composition was vulcanized for 33 minutes at 145°C to be obtained as a vulcanized rubber, which was measured for the tensile strength (Tb) in accordance with JIS K6251-2010.

### (3) Wet Performance

Using the rubber composition obtained as described above as a tread rubber, a passenger vehicle pneumatic radial tire of size 195/65R15 was fabricated. The test tire thus fabricated was mounted onto a test vehicle, so as to evaluate the steering stability by feeling ratings of the driver in an actual vehicle test on a wet road surface. The results are indexed with the feeling rating 100 for the tire of Comparative Example 1. Larger index values indicate more excellent wet performance.

### (4) Fuel Efficiency

Calculated was the inverse of tanδ at 60°C measured as described above for each of the vulcanized rubbers, and each inverse was indexed with the inverse 100 of tanδ of Comparative Example 1. Larger index values indicate smaller tanδ at 60°C, meaning that the fuel efficiency is excellent.

### (5) Abrasion Resistance Performance

The rubber composition thus obtained was vulcanized at 145°C for 33 minutes, and thereafter measured for abrasion loss at 23°C using Lambourn abrasion tester, according to JIS K 6264-2:2005. The results were each indexed with the inverse 100 of the abrasion loss of Comparative Example 1. Larger index values indicate more favorable abrasion resistance performance with smaller abrasion loss.

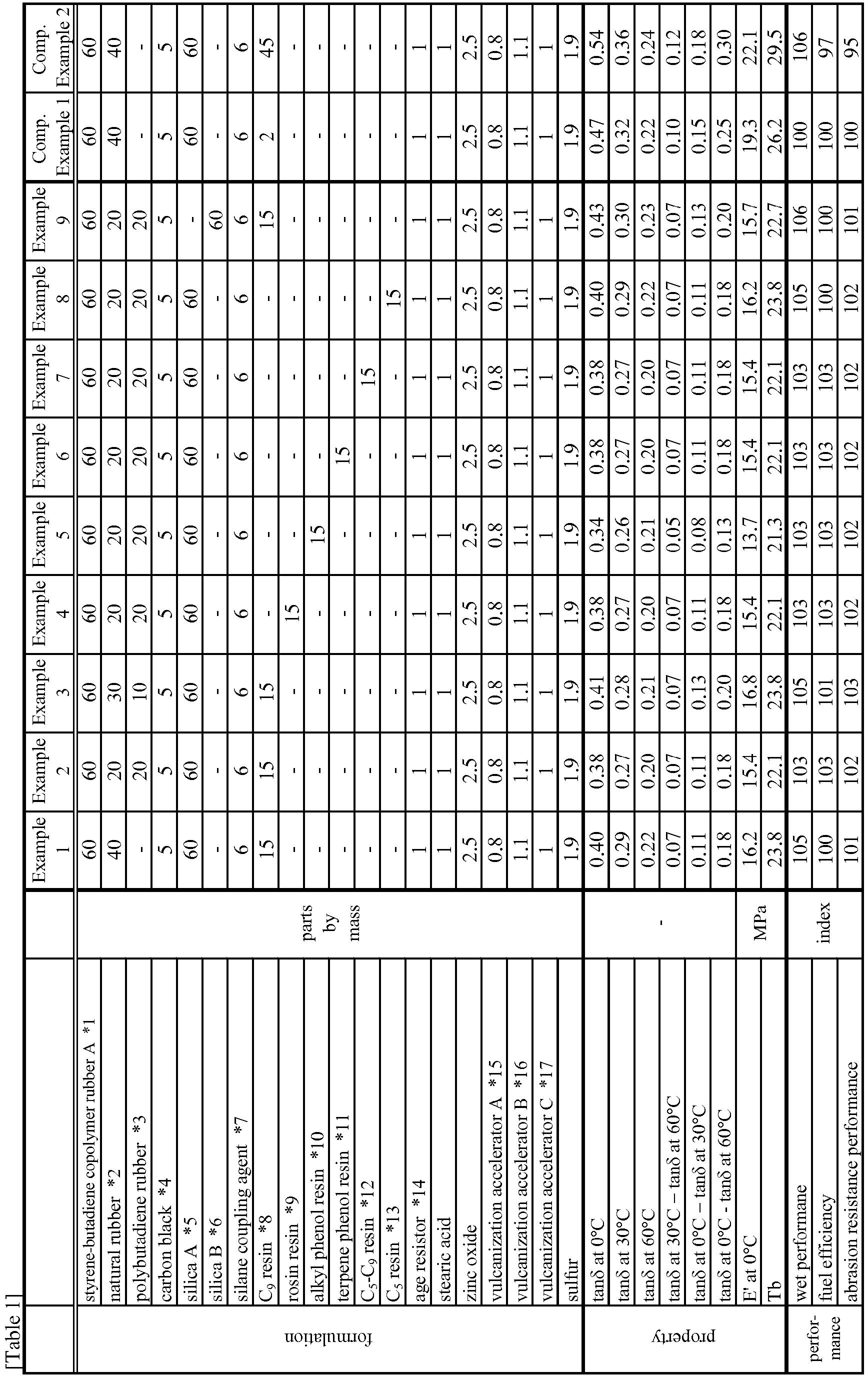

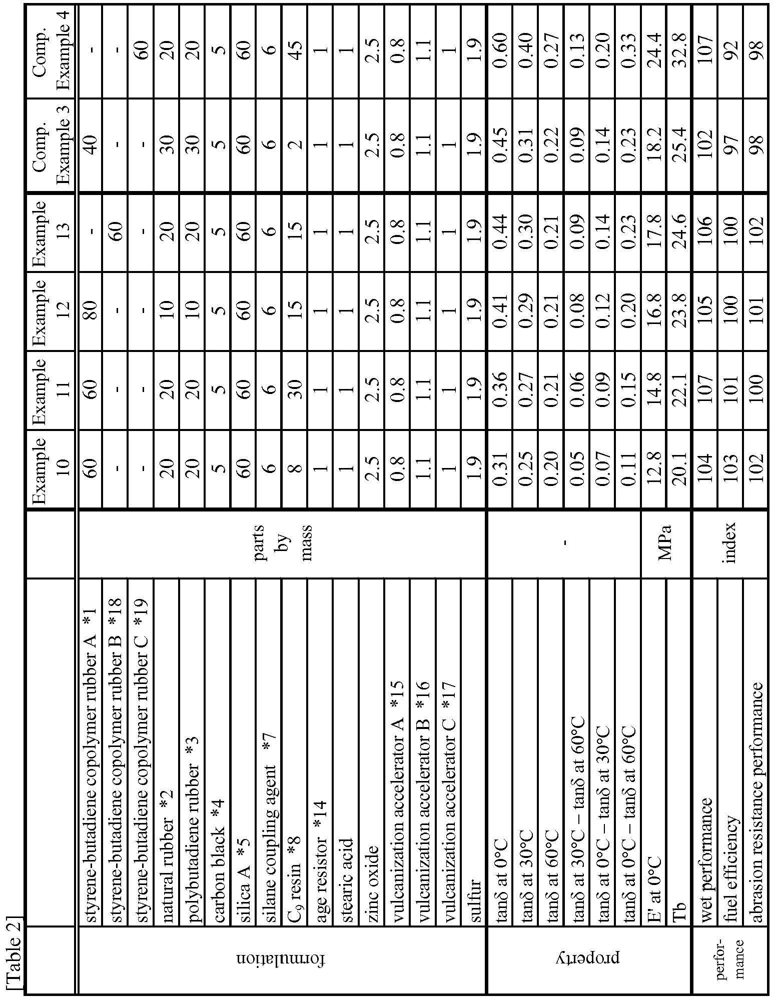

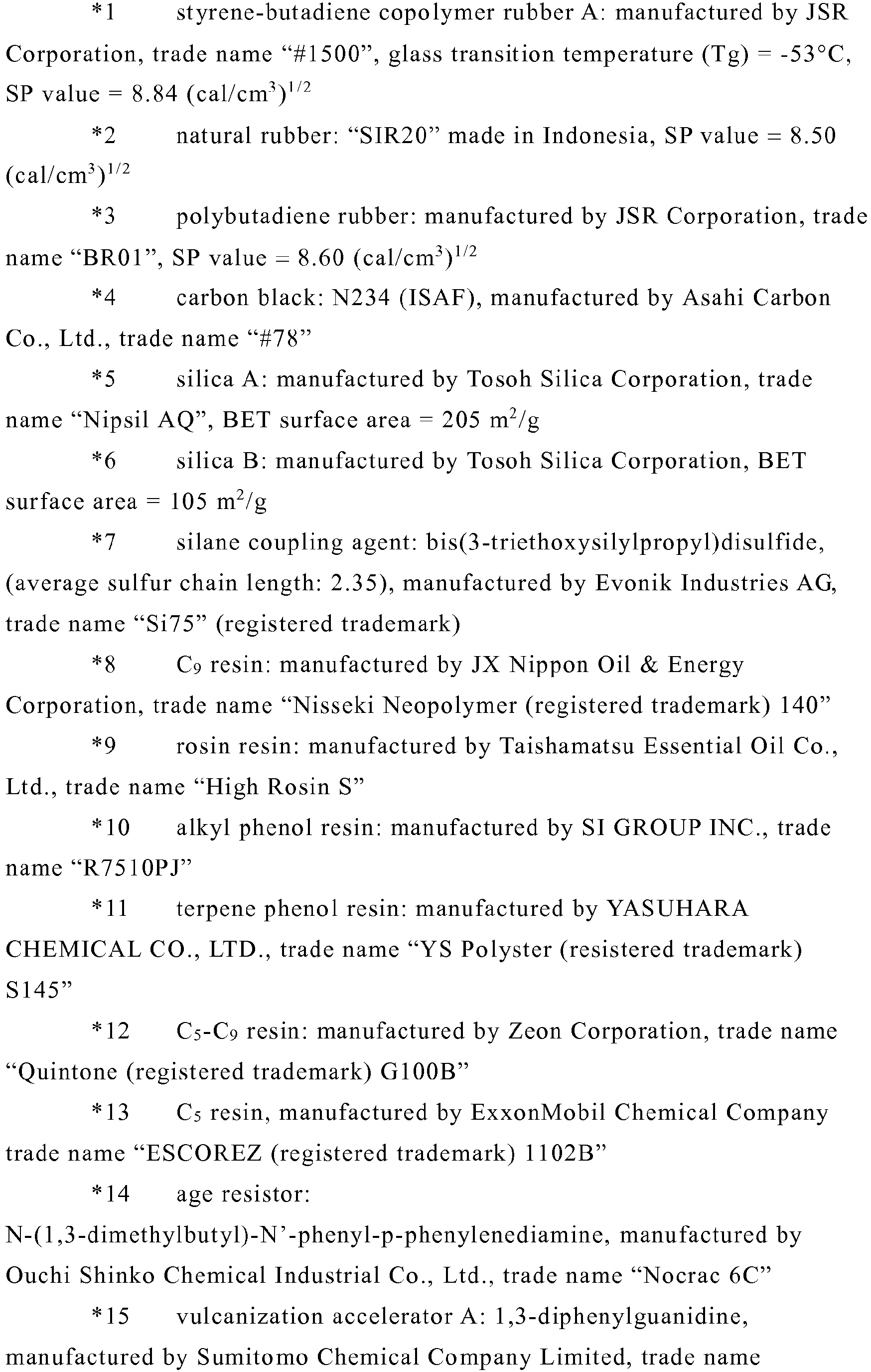

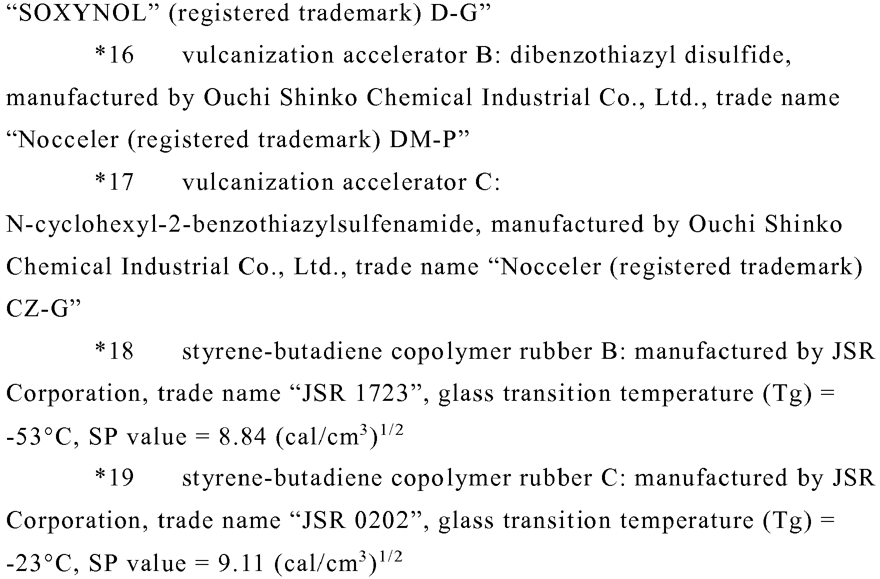

Referring to Tables 1 to 2, the disclosed rubber composition can be found to improve, when applied to a tire, wet performance without deteriorating fuel efficiency of the tire. The disclosed rubber composition can also improve abrasion resistance performance of the tire.

### INDUSTRIAL APPLICABILITY

The disclosed rubber composition can be used as a tread rubber of a tire. The disclosed tire can be used as tires for various vehicles.

## Claims

1. A rubber composition comprising: a rubber component (A) containing a styrene-butadiene copolymer rubber (A1) having a glass transition temperature (Tg) of -30°C or less, and a rubber (A2) other than the styrene-butadiene rubber (A1), the rubber (A2) being different in SP value by 0.35 (cal/cm³)^{1/2} or less from the styrene-butadiene copolymer rubber (A1); a thermoplastic resin (B); and a filler (C),
the rubber component (A) containing 50 to 90 mass% of the styrene-butadiene copolymer rubber (A1), containing 10 to 50 mass% of the rubber (A2) different in SP value from the styrene-butadiene copolymer rubber (A1) by 0.35 (cal/cm³)^{1/2} or less, and containing 0 to 10 mass% of a rubber (A3) being different in SP value from the styrene-butadiene copolymer rubber (A1) by more than 0.35 (cal/cm³)^{1/2},
wherein the thermoplastic resin (B) is compounded by 5 to 40 parts by mass with respect to 100 parts by mass of the rubber component (A),
the rubber composition containing silica as the filler (C),
wherein the filler (C) is compounded by 60 parts by mass or more with respect to 100 parts by mass of the rubber component (A), and
the silica is compounded by 40 to 70 parts by mass with respect to 100 parts by mass of the rubber component (A).

2. The rubber composition according to claim 1, wherein:
tanδ at 0°C is 0.5 or less; and
a difference between tanδ at 30°C and tanδ at 60°C is 0.07 or less.

3. The rubber composition according to claim 1 or 2, which has a storage modulus of 20 MPa or less on dynamic strain of 1% at 0°C.

4. The rubber composition according to any one of claims 1 to 3, wherein a difference between tanδ at 0°C and tanδ at 30°C is 0.30 or less.

5. The rubber composition according to any one of claims 1 to 4, wherein a difference between tanδ at 0°C and tanδ at 60°C is 0.35 or less.

6. The rubber composition according to any one of claims 1 to 5, which contains carbon black as the filler (C),
wherein the carbon black is compounded by 1 to 10 parts by mass with respect to 100 parts by mass of the rubber component (A).

7. The rubber composition according to any one of claims 1 to 6, wherein the thermoplastic resin (B) is one or more resins selected from the group consisting of: C₅ resins; C₉ resins, C₅-C₉ resins, dicyclopentadiene resins, rosin resins, alkyl phenol resins, and terpene phenol resins.

8. A tire using the rubber composition according to any one of claims 1 to 7 as a tread rubber.

## Patentansprüche

1. Gummizusammensetzung, umfassend: eine Gummikomponente (A), die einen Styrol-Butadien-Copolymer-Kautschuk (A1) mit einer Glasübergangstemperatur (Tg) von -30 °C oder weniger und einen anderen Gummi (A2) als den Styrol-Butadien-Kautschuk (A1) enthält, wobei sich der Gummi (A2) im SP-Wert um 0,35 (cal/cm³)^{1/2} oder weniger von dem Styrol-Butadien-Copolymer-Kautschuk (A1) unterscheidet; ein thermoplastisches Harz (B); und einen Füllstoff (C),
wobei die Gummikomponente (A) zu 50 bis 90 Massen-% den Styrol-Butadien-Copolymer-Kautschuk (A1) enthält, zu 10 bis 50 Massen-% den Gummi (A2) enthält, dessen SP-Wert sich von dem Styrol-Butadien-Copolymer-Kautschuk (A1) um 0,35 (cal/cm³)^{1/2} oder weniger unterscheidet, und zu 0 bis 10 Massen-% einen Gummi (A3) enthält, dessen SP-Wert sich von dem Styrol-Butadien-Copolymer-Kautschuk (A) um mehr als 0,35 (cal/cm³)^{1/2} unterscheidet,
wobei das thermoplastische Harz (B) mit 5 bis 40 Massenteilen in Bezug auf 100 Massenteile der Gummikomponente (A) compoundiert ist,
wobei die Gummizusammensetzung Kieselerde als den Füllstoff (C) enthält, wobei der Füllstoff (C) mit 60 Massenteilen oder mehr in Bezug auf 100 Massenteile der Gummikomponente (A) compoundiert ist, und
die Kieselerde mit 40 bis 70 Massenteilen in Bezug auf 100 Massenteile der Gummikomponente (A) compoundiert ist.

2. Gummizusammensetzung nach Anspruch 1, wobei:
tanδ bei 0 °C 0,5 oder weniger beträgt; und
eine Differenz zwischen tanδ bei 30 °C und tan δ bei 60 °C 0,07 oder weniger beträgt.

3. Gummizusammensetzung nach Anspruch 1 oder 2, welche einen Speichermodul von 20 MPa oder weniger bei dynamischer Dehnung von 1 % bei 0 °C aufweist.

4. Gummizusammensetzung nach einem der Ansprüche 1 bis 3, wobei eine Differenz zwischen tanδ bei 0 °C und tanδ bei 30 °C 0,30 oder weniger beträgt.

5. Gummizusammensetzung nach einem der Ansprüche 1 bis 4, wobei eine Differenz zwischen tanδ bei 0 °C und tanδ bei 60 °C 0,35 oder weniger beträgt.

6. Gummizusammensetzung nach einem der Ansprüche 1 bis 5, welche Ruß als den Füllstoff (C) enthält,
wobei der Ruß mit 1 bis 10 Massenteilen in Bezug auf 100 Massenteile der Gummikomponente (A) compoundiert ist.

7. Gummizusammensetzung nach einem der Ansprüche 1 bis 6, wobei es sich bei dem thermoplastischen Harz (B) um ein oder mehrere Harze handelt, ausgewählt aus der Gruppe bestehend aus: Cs-Harzen; C₉-Harzen, C₅-C₉-Harzen, Dicyclopentadienharzen, Terpentinharzen, Alkylphenolharzen und Terpen-Phenol-Harzen.

8. Reifen, bei dem die Gummizusammensetzung nach einem der Ansprüche 1 bis 7 als Laufflächengummi verwendet wird.

## Revendications

1. Composition de caoutchouc comprenant : un composant de caoutchouc (A) contenant un caoutchouc de copolymère styrène-butadiène (A1) ayant une température de transition vitreuse (Tg) de -30 °C ou moins, et un caoutchouc (A2) autre que le caoutchouc styrène-butadiène (A1), le caoutchouc (A2) étant différent en valeur SP de 0,35 (cal/cm³)^{1/2} ou moins par rapport au caoutchouc de copolymère styrène-butadiène (A1) ; une résine thermoplastique (B) ; et une charge (C),
le composant de caoutchouc (A) contenant 50 à 90 % en masse du caoutchouc de copolymère styrène-butadiène (A1), contenant 10 à 50 % en masse du caoutchouc (A2) différent en valeur SP par rapport au caoutchouc de copolymère styrène-butadiène (A1) de 0,35 (cal/cm³)^{1/2} ou moins, et contenant 0 à 10 % en masse d'un caoutchouc (A3) étant différent en valeur SP par rapport au caoutchouc de copolymère styrène-butadiène (A1) de plus de 0,35 (cal/cm³)^{1/2},
dans laquelle la résine thermoplastique (B) est mélangée à raison de 5 à 40 parties en masse par rapport à 100 parties en masse du composant de caoutchouc (A),
la composition de caoutchouc contenant de la silice en guise de charge (C), dans laquelle la charge (C) est mélangée à raison de 60 parties en masse ou plus par rapport à 100 parties en masse du composant de caoutchouc (A), et
la silice est mélangée à raison de 40 à 70 parties en masse par rapport à 100 parties en masse du composant de caoutchouc (A).

2. Composition de caoutchouc selon la revendication 1, dans laquelle :
tanδ à 0 °C vaut 0,5 ou moins ; et
une différence entre tanδ à 30 °C et tanδ à 60 °C vaut 0,07 ou moins.

3. Composition de caoutchouc selon la revendication 1 ou 2, qui a un module de conservation de 20 MPa ou moins sur une déformation dynamique de 1 % à 0 °C.

4. Composition de caoutchouc selon l'une quelconque des revendications 1 à 3, dans laquelle une différence entre tanδ à 0 °C et tanδ à 30 °C vaut 0,30 ou moins.

5. Composition de caoutchouc selon l'une quelconque des revendications 1 à 4, dans laquelle une différence entre tanδ à 0 °C et tanδ à 60 °C vaut 0,35 ou moins.

6. Composition de caoutchouc selon l'une quelconque des revendications 1 à 5, qui contient du noir de carbone en guise de charge (C),
dans laquelle le noir de carbone est mélangé à raison de 1 à 10 parties en masse par rapport à 100 parties en masse du composant de caoutchouc (A).

7. Composition de caoutchouc selon l'une quelconque des revendications 1 à 6, dans laquelle la résine thermoplastique (B) est une ou plusieurs résines choisies dans le groupe constitué de : résines en C₅ ; résines en C₉, résines en C₅ à C₉, résines de dicyclopentadiène, résines de colophane, résines d'alkyl-phénol, et résines de terpène-phénol.

8. Pneu utilisant la composition de caoutchouc selon l'une quelconque des revendications 1 à 7 en tant que caoutchouc de bande de roulement.
